# EUROPÄISCHE PATENTSCHRIFT

(11) **EP 2 644 952 B1**
(45) Veröffentlichungstag und Bekanntmachung des Hinweises auf die Patenterteilung: **16.09.2015**
(21) Anmeldenummer: 12002382.5
(22) Anmeldetag: 31.03.2012
(51) Int. Cl.: F16K 3/14

(54) **Schieber zum Absperren einer Rohrleitung**
Gate valve for shutting off a pipe
Vanne à coulisse pour fermer une conduite

(43) Veröffentlichungstag der Anmeldung: 02.10.2013
(73) Patentinhaber: Phönix Armaturen-Werke Bregel GmbH, 34471 Volkmarsen (DE)
(72) Erfinder: Schubert, Matthias, 34369 Hofgeismar (DE); Wodara, Gunter, 34454 Bad Arolsen (DE); Kellermann, Hannes, 34117 Kassel (DE)
(74) Vertreter: Walther, Walther & Hinz GbR

(56) Entgegenhaltungen:
- DE-A1- 2 923 885
- DE-A1- 3 739 483
- DE-B- 1 186 711
- DE-C- 758 742
- DE-C- 759 211
- DE-C- 877 078
- DE-C1- 4 218 877

## Beschreibung

Die Erfindung betrifft einen Schieber zum Absperren einer Rohrleitung, wobei der Schieber ein Schiebergehäuse und einen Schieberkeil umfasst, der in eine in dem Schiebergehäuse angeordnete Keilaufnahme einschiebbar ist, wobei der Schieberkeil in Durchgangsrichtung der Rohrleitung zu beiden Seiten eine Keilplatte aufweist, die mit Spiel in Richtung der Mittellängsachse der Rohrleitung an dem Schieberkeil angeordnet sind, wobei jede Keilplatte durch mindestens ein elastisches Element gegen die Keilaufnahme in dem Schiebergehäuse pressbar ist wobei das mindestens eine elastische Element als ein etwa kreisförmig umlaufender Balg ausgebildet ist.

Die Anordnung der Keilplatte mit Spiel an dem Schieberkeil bewirkt, dass die Keilplatte durch das elastische Element unter Ausnutzung eines axialen Spiels gegen die Keilaufnahme pressbar ist.

Ein Schieber der eingangs genannten Art ist aus dem Stand der Technik bekannt. Schieber dienen gemeinhin dem Absperren von Rohrleitungen, in denen flüssige oder gasförmige Medien transportiert werden. Hierzu wird der Schieber mit dem Schiebergehäuse in die Rohrleitung eingesetzt, d.h. zu beiden Seiten des Schiebergehäuses ist die Rohrleitung angeflanscht. Das Schiebergehäuse weist einen Spindeltrieb auf, der üblicherweise motorisch angetrieben ist. Der Spindeltrieb zeigt endseitig im Schiebergehäuse den Schieberkeil, der in die Keilaufnahme des Schiebergehäuses mittels des Spindeltriebs einschiebbar ist, und insofern die Rohrleitung absperrt.

Problematisch bei derartigen Schiebern ist immer die Erzeugung der erforderlichen Dichtkraft, um zu gewährleisten, dass die Rohrleitung tatsächlich vollständig gegen das in ihr transportierte Medium abgesperrt ist. Insofern ist bereits bekannt, dass der Schieberkeil eine Keilplatte zumindest auf einer Seite des Schieberkeils aufweist, wobei die Keilplatte mit axialem Spiel am Schieberkeil angeordnet ist. "Axial" bedeutet hierbei in Richtung der Längsachse des Rohres. Dies vor folgendem Hintergrund: Der Schieberkeil ist in der Ansicht als eine kreisförmige Scheibe ausgebildet. Die Keilplatte, die von dem Schieberkeil aufgenommen ist, ist als Kreisring ausgebildet. Es wurde bereits darauf hingewiesen, dass die Keilplatte mit Spiel in Richtung der Rohrachse durch den Schieberkeil aufgenommen ist. Um nun zum Zwecke der Dichtigkeit zu gewährleisten, dass die Rohrleitung tatsächlich vollständig abgesperrt ist, ist zwischen Keilplatte einerseits und Schieberkeil andererseits ein elastisches Element vorgesehen, das dafür sorgt, dass die Keilplatte gegen die Keilaufnahme gepresst gehalten wird. Als elastische Elemente sind hierbei insbesondere Federn vorgesehen, die dafür sorgen, dass die Keilplatte gegen die Keilaufnahme gedrückt wird. D.h. die kreisringförmige Keilplatte wird gegen den Dichtungssitz in der Keilaufnahme gepresst. Allerdings wird die Keilplatte nicht nur dann gegen den Dichtungssitz der Keilaufnahme gepresst, wenn der Schieberkeil seine Geschlossenstellung erreicht hat, sondern auch bereits während des Einführvorgangs. Dies hat zur Folge, dass beim Einführen des Schieberkeils in die Keilaufnahme die Keilplatte bereits an dem Dichtungssitz der Keilaufnahme anliegt. Der jeweilige Dichtungssitz der Keilaufnahme wird üblicherweise durch eine an der Keilaufnahme, die durch das Schiebergehäuse gebildet wird, angeordnete umlaufende Dichtung gebildet und eine an der Keilplatte entsprechend ausgebildete Dichtung, wobei die Dichtungen als Edelstahlpaarungen in Form von metallischen Aufschweißungen ausgeführt sein können. Wird nun der Schieberkeil in die Keilaufnahme eingeführt, und steht hierbei die Keilplatte unter Spannung in Achsrichtung der Rohrleitung, so werden beim Einführvorgang des Schieberkeils in die Keilaufnahme die beiden Dichtflächen aneinander reiben. Da die elastischen Elemente, die für die Vorspannung der Keilplatte relativ zum Schieberkeil sorgen, sehr steif sind, um eine möglichst gute Abdichtung zu gewährleisten, sind auch die Reibkräfte erheblich. Dies hat zur Folge, dass die Dichtflächen bereits nach einigen wenigen Öffnungs- und Schließvorgängen verschlissen sind, mit der weiteren Folge, dass durch den Schieberkeil die Rohrleitung nicht mehr mit hinreichender Sicherheit dicht abgesperrt werden kann.

Aus der DE 1 186 711B ist ein Absperrschieber der eingangs genannten Art bekannt, der zwei bewegliche Verschlussplatten umfasst, die jeweils einen Dichtring aufweisen, wobei die Dichtringe jeweils durch einen federnden Wulst mit der zugehörigen Verschlussplatte verbunden sind. Aufgrund der konstruktiven Ausgestaltung des Schiebers wird der Schieber mit dem Dichtring bei unterschiedlichen Ein- und Ausgangsdrücken in der abzusperrenden Rohrleitung an die entsprechend eine oder andere Seite des Schiebergehäuses gepresst, während der Dichtring an der jeweils anderen Seite des Schiebergehäuses nur mit geringer Kraft anliegt, um dann bei Überdruck im Gehäuse des Schiebers durch Abheben des Dichtrings von der Dichtfläche des Schiebergehäuses für einen Abbau des Überdrucks zu sorgen. Diese Funktionsweise bedingt allerdings auch einen erhöhten Verschleiß an den Dichtflächen.

Die der Erfindung zugrunde liegende Aufgabe besteht demzufolge darin, dafür zu sorgen, dass erst dann, wenn der Schieberkeil im Wesentlichen vollständig von der Keilaufnahme aufgenommen ist, mithin die Dichtflächen sowohl der Keilaufnahme als auch der Keilplatte im Wesentlichen einander deckend aufeinanderliegen, dass erst dann die Dichtkraft aufgebaut wird.

Zur Lösung der Aufgabe wird erfindungsgemäß vorgeschlagen, dass der Balg eine zentrische Öffnung aufweist, und dass der Schieberkeil zwei Öffnungen zur Aufnahme von Führungsstangen im Schiebergehäuse aufweist. Der Balg, der insofern im Wesentlichen ringförmig ausgebildet ist, befindet sich zwischen dem Schieberkeil einerseits und der Keilplatte andererseits. Beim Absperrvorgang einer Rohrleitung wird erst dann, wenn der Schieberkeil seine Endposition erreicht hat, auf der Druckseite der Rohrleitung sich ein Druck aufbauen. Dieser Druckaufbau sorgt dafür, dass in diesem Moment der Balg in Achsrichtung der Rohrleitung gedehnt wird, mit der Folge, dass erst im geschlossenen Zustand des Schiebers, die Keilplatte mit ihrer Dichtung an der Dichtung der Keilaufnahme unter Druck anliegt. Oder anders ausgedrückt bedeutet dies, dass die ringförmige Keilplatte mit ihrer ebenfalls ringförmigen Dichtung erst dann an die ringförmige Dichtung der Keilaufnahme angepresst wird, wenn der Schieberkeil im Wesentlichen seine Endlage erreicht hat, und hierbei durch den in der Rohrleitung anstehenden Druck der Balg gespreizt wird, mit der Folge, dass durch die Spreizung des Balges der ebenfalls im Wesentlichen ringförmig ausgebildet ist, die Keilplatte mit ihrer Dichtung gegen die ringförmige Dichtung in der Keilaufnahme gepresst wird, die durch das Schiebergehäuse bereit gestellt wird.

Vorteilhafte Merkmale und Ausgestaltung zu der Erfindung ergeben sich aus den Unteransprüchen.

So ist insbesondere vorgesehen, dass die Keilplatte lösbar mit dem Schieberkeil verbindbar ist. Dies vor dem Hintergrund, dass die Keilplatte ein Verschleißteil ist, das gegebenenfalls leicht austauschbar sein muss. Insbesondere ist hierbei vorgesehen, dass die Keilplatte mit dem Schieberkeil durch einen Bajonettverschluss verbunden ist.

Nach einem weiteren Merkmal der Erfindung ist der Balg als Metallbalg ausgebildet. Der Metallbalg, der insbesondere als Wellenbalg ausgebildet ist, und mindestens eine Welle, vorzugsweise jedoch drei Wellen aufweist, ist hierbei endseitig, vorzugsweise am äußeren Rand sowohl mit dem Schieberkeil, als auch mit der Keilplatte jeweils mediendicht verbunden, insbesondere verschweißt.

Muss nun die Keilplatte aufgrund des Verschleißes ausgetauscht werden, so ist lediglich erforderlich, dass im Bereich des Übergangs von dem Balg zur Keilplatte die Schweißnaht des Balges aufgetrennt wird, um dann die Keilplatte aus dem Bajonettverschluss zu drehen. Denkbar ist allerdings ebenfalls die Schweißnaht zur Verbindung des Balges mit der Keilplatte aufzutrennen, um dann die Keilplatte samt Balg aus dem Bajonettverschluss herauszudrehen.

Der Wellenbalg weist bevorzugt drei Wellen auf, wobei eine der Wellen nach außen und zwei nach innen, d. h. auf die Mittellängsachse des Rohres zu, ausgerichtet sind. Insofern ist der Balg im Querschnitt mäanderförmig ausgebildet.

Die Funktionsweise der Abdichtung des Schieberkeils über die Keilplatte mithilfe des zwischen dem Schieberkeil und der Keilplatte angeordneten Balges ist nun derart, dass dann, wenn der Schieberkeil seine Endlage in geschlossener Position eingenommen hat, durch die in der Rohrleitung und mithin auch in dem Schiebergehäuse anstehenden Druck des Mediums der Balg in Achsrichtung der Rohrleitung gedehnt wird, mit der Folge, dass die Keilplatte, die mit entsprechendem Spiel durch den Schieberkeil aufgenommen ist mit ihrer Dichtung an die Dichtung der Keilaufnahme des Schiebergehäuses angepresst wird.

Durch die zentrische Öffnung in dem Balg wird auch erreicht, dass durch das Medium der Innenraum des Balges immer ausgespült wird, so dass sich dort auf Dauer keine Schmutzansammlungen absetzen können. Dies im Gegensatz zum Stand der Technik, bei dem zum Spreizen der Keilplatte relativ zum Schieberkeil als elastische Elemente Federn vorgesehen sein können, wobei sich herausgestellt hat, dass derartige Federn sich zusetzen, sodass beim Einführvorgang des Schieberkeils die Dichtung der Keilplatte an der Dichtung der Keilaufnahme einer erhöhten Reibkraft ausgesetzt und damit einem erhöhten Verschleiß ausgesetzt sind, da die Keilplatte nicht oder nur noch im geringen Maße axial beweglich ist.

Anhand der Zeichnungen wird die Erfindung nachstehend beispielhaft näher erläutert.
- Figur 1: zeigt einen Schnitt durch einen Schieber, wobei der Spindelantrieb für den Schieberkeil lediglich angedeutet ist.
- Fig. 2: zeigt in Explosionsdarstellung den Aufbau des Schieberkeils mit Keilplatte und Balg.

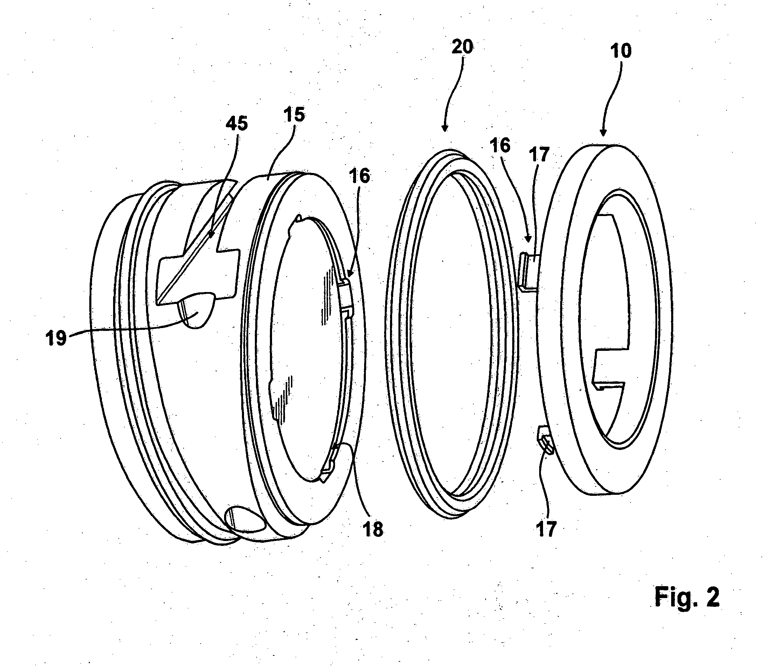

Der Schieber ist insgesamt mit 1 bezeichnet; gezeigt ist lediglich das Schiebergehäuse 2, der Spindeltrieb ist nicht dargestellt. Das mit 2 bezeichnete Schiebergehäuse weist im Bereich des Durchlasses 3 die mit 5 bezeichnete Keilaufnahme auf. Zum Bewegen des Schieberkeils 15 in Richtung des Doppelpfeiles 30 dient der an dem Schieberkeil angeordnete Spindeltrieb 40, der lediglich angedeutet ist. Für die Anbindung des Spindeltriebes 40 an den Schieberkeil 15 weist der Schieberkeil eine entsprechende Aufnahme 45 auf. Wie sich in Anschauung von Fig. 2 ergibt, hat der Schieberkeil zwei Öffnungen 19 zur Aufnahme von Führungsstangen (nicht dargestellt) im Schiebergehäuse 2. Die Keilaufnahme im Schiebergehäuse ist im Wesentlichen kreisringförmig ausgebildet, und besitzt auf ihrer der Keilplatte 10 zugewandten Seite eine Dichtung 7, bildend einen Dichtungssitz. Korrespondierend zu der Dichtung 7 zeigt die Keilplatte 10 eine entsprechende Dichtung 11. Die Keilplatte 10 ist durch den Schieberkeil 15 mit einem Spiel x in Achsrichtung des Schieberdurchganges (Pfeil 12) durch den Schieberkeil aufgenommen. Zwischen dem Schieberkeil 15 und der Keilplatte 10 befindet sich der mit 20 bezeichnete Balg. Der Balg 20 zeigt drei Wellen auf, wobei zwei der Wellen in Richtung auf die Mittellängsachse der Schieberdurchgangsöffnung (Pfeil 12) ausgerichtet sind, und einer in entgegengesetzter Richtung. Insofern ergibt sich für den Balg 20 ein mäanderförmiger Verlauf. Der Balg 20 ist mit seinen Enden jeweils am äußeren Rand 21 und 22 mit der Keilplatte und dem Schieberkeil verbunden, wobei die Verbindung als Schweißverbindung ausgebildet ist, wenn der Balg 20 ein Metallbalg ist.

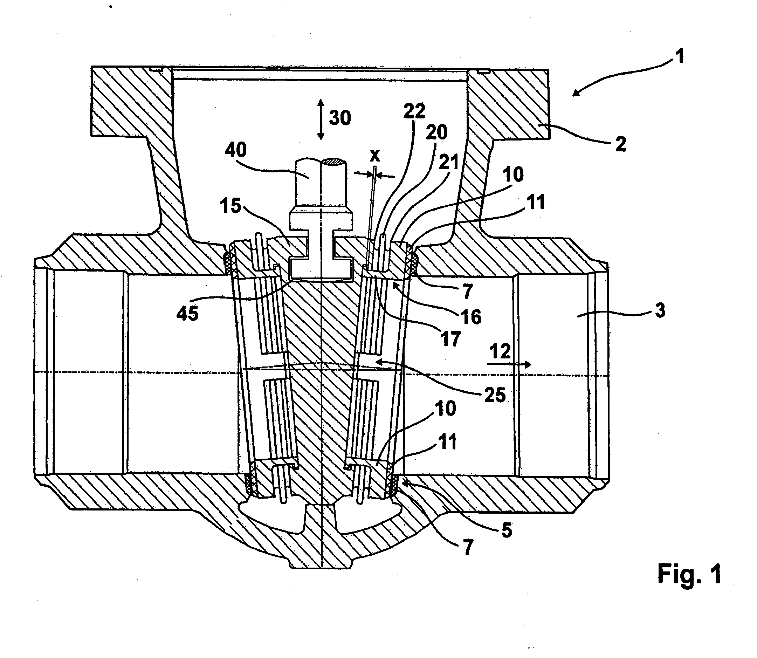

Es wurde bereits darauf hingewiesen, dass die Keilplatte 10 von dem Schieberkeil mit einem Spiel x aufgenommen ist. Die Keilplatte 20 steht mit dem Schieberkeil 15 durch einen Bajonettverschluss in Verbindung, wobei das Spiel x durch den Bajonettverschluss ausgebildet wird. Der Bajonettverschluss 16 umfasst mehrere, insbesondere vier Finger 17, die in eine ringförmige Hinterschneidung 18 im Schieberkeil eingreifen. Zur Erläuterung wird diesbezüglich auf Figur 2 verwiesen. Die kreisringförmigen Finger sind hierbei derart an der Keilplatte 10 angeordnet, dass diese auf der Innenseite des Balges vorbeigeführt werden. Zentrisch weist der Balg 20 insofern eine Öffnung 25 auf, die im Wesentlichen dem Innendurchmesser der Keilplatte 10 entspricht. Wenn der Schieberkeil seine Schließstellung erreicht hat, wie sie in der Figur 1 dargestellt ist, wird aufgrund des Innendruckes im Schieberdurchgang der Balg 20 gespreizt, mit der Folge, dass die Keilplatte 10 mit der Dichtung 11 gegen die Dichtung 7 der Keilaufnahme 5 gedrückt wird. Hierbei wird das Spiel x auf die gegenüberliegende Seite der Figur 17 der Keilplatte 10 verlagert.

Wird nun der Schieberkeil 15 aus der Schließstellung herausgezogen, dann wird in dem Moment, wo zu beiden Seiten des Schieberkeils der gleiche Druck herrscht, der Balg in seine Ausgangsstellung zurückgelangen, mit der Folge, dass hierbei die Keilplatte 10 aufgrund der Spannung des Balges 20 an den Schieberkeil 15 herangezogen wird, und eine Stellung einnimmt, wie sie in der Fig. 1 dargestellt ist. Das heißt, der Balg ist derart vorgespannt, dass bei Druckausgleich durch den Balg die Keilplatte an den Schieberkeil herangezogen wird. In diesem Moment wird der Druck zwischen den Dichtungen 7 und 11 abgebaut, mit der Folge, dass beim weiteren Öffnen des Schiebers die Dichtungen 7 und 11 nur noch leicht aufeinander entlanggleiten, mithin nur einem geringen Verschleiß unterworfen sind.

### Bezugszeichenliste:

- 1: Schieber
- 2: Schiebergehäuse
- 3: Durchlass
- 5: Keilaufnahme
- 7: Dichtung am Schiebergehäuse
- 10: Keilplatte
- 11: Dichtung an der Keilplatte
- 12: Pfeil
- 15: Schieberkeil
- 16: Bajonettverschluss
- 17: Finger des Bajonettverschlusses
- 18: Hinterschneidung in der Keilplatte als Teil des Bajonettverschlusses
- 19: Öffnung für Führungsstange
- 20: Balg
- 21: äußerer Rand zur Keilplatte
- 22: äußerer Rand zum Schieberkeil
- 25: Öffnung
- 30: Doppelpfeil
- 40: Spindeltrieb
- 45: Aufnahme für Spindeltrieb
- x: Spiel

## Patentansprüche

1. Schieber (1) zum Absperren einer Rohrleitung, wobei der Schieber (1) ein Schiebergehäuse (2) und einen Schieberkeil (15) umfasst, der in eine in dem Schiebergehäuse (2) angeordnete Keilaufnahme (5) einschiebbar ist, wobei der Schieberkeil (15) in Durchgangsrichtung der Rohrleitung zu beiden Seiten eine Keilplatte (10) aufweist, die mit Spiel in Richtung des Mittellängsachse der Rohrleitung an dem Schieberkeil (15) angeordnet sind, wobei jede Keilplatte (10) durch mindestens ein elastisches Element gegen die Keilaufnahme (5) in dem Schiebergehäuse (2) pressbar ist,
wobei das mindestens eine elastische Element als ein etwa kreisförmig umlaufender Balg (20) ausgebildet ist,
**dadurch gekennzeichnet,**
**dass** der Balg (20) eine zentrische Öffnung (25) aufweist, und dassder Schieberkeil (15) zwei Öffnungen (19) zur Aufnahme von Führungsstangen im Schiebergehäuse (2) aufweist.

2. Schieber (1) zum Absperren einer Rohrleitung nach Anspruch 1,
**dadurch gekennzeichnet,**
**dass** die Keilplatte (10) lösbar mit dem Schieberkeil (15) verbindbar ist.

3. Schieber (1) zum Absperren einer Rohrleitung nach Anspruch 2,
**dadurch gekennzeichnet,**
**dass** die Keilplatte (10) mit dem Schieberkeil (15) durch einen Bajonettverschluss (16) verbunden ist.

4. Schieber (1) zum Absperren einer Rohrleitung nach einem der vorangehenden Ansprüche,
**dadurch gekennzeichnet,**
**dass** der Balg (20) als Metallbalg ausgebildet ist.

5. Schieber (1) zum Absperren einer Rohrleitung nach Anspruch 1 bis 3, insbesondere nach Anspruch 4,
**dadurch gekennzeichnet,**
**dass** der Balg (20) am äußeren Rand (21, 22) sowohl mit dem Schieberkeil (15) als auch der auf der Keilplatte (10) mediendicht verbunden, insbesondere verschweißt, ist.

6. Schieber (1) zum Absperren einer Rohrleitung nach einem der voranstehenden Ansprüche,
**dadurch gekennzeichnet,**
**dass** der Balg (20) als Wellenbalg ausgebildet ist.

7. Schieber (1) zum Absperren einer Rohrleitung nach Anspruch 6,
**dadurch gekennzeichnet,**
**dass** der Balg (20) mindestens eine Welle, vorzugsweise drei Wellen aufweist.

8. Schieber (1) zum Absperren einer Rohrleitung nach Anspruch 6 oder 7,
**dadurch gekennzeichnet,**
**dass** der Balg (20) nach außen und nach innen gerichtete Wellen aufweist.

9. Schieber (1) zum Absperren einer Rohrleitung nach einem der voranstehenden Ansprüche,
**dadurch gekennzeichnet,**
**dass** zwischen Keilplatte (10) und Keilaufnahme (5) mindestens eine Dichtung (7, 11) vorgesehen ist.

10. Schieber (1) zum Absperren einer Rohrleitung nach Anspruch 9,
**dadurch gekennzeichnet,**
**dass** sowohl die Keilplatte (10) als auch die Keilaufnahme (5) jeweils eine umlaufende Dichtung (7, 11) aufweisen.

11. Schieber (1) zum Absperren einer Rohrleitung nach einem der voranstehenden Ansprüche,
**dadurch gekennzeichnet,**
**dass** der Schieberkeil (15) mit einem Spindelantrieb (40) in Verbindung steht.

## Claims

1. A gate valve (1) for shutting off a pipe, wherein the gate valve (1) comprises a valve body (2) and a wedge (15), which is insertable into a wedge receptacle (5) disposed in the valve body (2), wherein the wedge (15) has a wedge plate (10) on both sides in the passage direction of the pipe, which is disposed on the wedge (15) with a clearance in the direction of the center longitudinal axis of the pipe, wherein the wedge plate (10) is adapted to be pressed against the wedge receptacle (5) in the valve body (2) by at least one elastic element,
wherein the at least one elastic element is configured as an approximately circular-shaped circumferential bellows (20),
**characterized in that**
the bellows (20) has a central opening (25) and that the wedge (15) has two openings (19) for receiving guide rods in the valve body (2).

2. The gate valve (1) for shutting off a pipe according to claim 1,
**characterized in that**,
the wedge plate (10) is detachably connectable to the wedge (15).

3. The gate valve (1) for shutting off a pipe according to claim 2,
**characterized in that**
the wedge plate (10) is connected to the wedge (15) by a bayonet mount (16).

4. The gate valve (1) for shutting off a pipe according to one of the aforementioned claims,
**characterized in that**
the bellows (20) is configured as a metallic bellows.

5. The gate valve (1) for shutting off a pipe according to one of the claims 1 to 3, more specifically to claim 4,
**characterized in that**
the bellows (20) is connected, more specifically welded, in a media-tight manner, at the outer edge (21, 22), with the wedge (15) and with the wedge plate (10).

6. The gate valve (1) for shutting off a pipe according to one of the aforementioned claims,
**characterized in that**
the bellows (20) is configured as a corrugated bellows.

7. The gate valve (1) for shutting off a pipe according to claim 6,
**characterized in that**
the bellows (20) has at least one corrugation, preferably three corrugations.

8. The gate valve (1) for shutting off a pipe according to claim 6 or 7,
**characterized in that**
the bellows (20) has outward oriented and inward oriented corrugations.

9. The gate valve (1) for shutting off a pipe according to one of the aforementioned claims,
**characterized in that**
at least one seal (7, 11) is provided between the wedge plate (10) and the wedge receptacle (5).

10. The gate valve (1) for shutting off a pipe according to claim 9,
**characterized in that**
the wedge plate (10) as well as the wedge receptacle (5) respectively have a circumferential seal (7, 11).

11. The gate valve (1) for shutting off a pipe according to one of the aforementioned claims,
**characterized in that**
the wedge (15) is connected to a spindle drive (40).

## Revendications

1. Vanne coulissante (1) pour fermer un conduit tubulaire, dans lequel la vanne coulissante (1) comporte un boîtier de vanne coulissante (2) et un coin coulissant (15), agencé pour être engagé en coulissement dans un dispositif récepteur du coin (5) ménagé dans le boîtier de vanne coulissante (2), dans lequel le coin coulissant (15) comporte dans la direction transversale du conduit tubulaire, sur ses deux côtés, respectivement une plaque latérale (10), ces plaques étant montées avec du jeu dans le sens de l'axe central longitudinal du conduit tubulaire, sur le coin coulissant (15), dans lequel chacune des plaques latérales (10) peut être compressée par au moins un élément élastique contre le récepteur de coin (5) ménagé dans le boîtier de vanne coulissante (2), dans lequel ledit au moins un élément élastique est configuré sous la forme d'un soufflet (20) circulaire périphérique,
**caractérisée en ce que**,
le soufflet (20) présente une ouverture centrale (25) et **en ce que** le coin coulissant (15) comporte deux ouvertures (19) pour réceptionner des barres de guidage dans le boîtier de vanne coulissante (2).

2. Vanne coulissante (1) pour fermer un conduit tubulaire, selon la revendication 1,
**caractérisée en ce que**,
la plaque latérale (10) peut être liée de façon amovible avec le coin coulissant (15).

3. Vanne coulissante (1) pour fermer un conduit tubulaire, selon la revendication 2,
**caractérisée en ce que**,
la plaque latérale (10) peut être couplée avec le coin coulissant (15) au moyen d'une liaison à baïonnette (16).

4. Vanne coulissante (1) pour fermer un conduit tubulaire, selon l'une des revendications précédentes,
**caractérisée en ce que**,
le soufflet (20) est constitué d'un soufflet métallique.

5. Vanne coulissante (1) pour fermer un conduit tubulaire, selon l'une des revendications 1 à 3, en particulier selon la revendication 4,
**caractérisée en ce que**,
le soufflet (20) est lié de façon médiane sur son pourtour extérieur (21, 22) ainsi qu'avec le coin coulissant (15) et avec la plaque latérale (10), de préférence par soudure.

6. Vanne coulissante (1) pour fermer un conduit tubulaire, selon l'une des revendications précédentes,
**caractérisée en ce que**,
le soufflet (20) est constitué par un soufflet à vagues.

7. Vanne coulissante (1) pour fermer un conduit tubulaire, selon la revendication 6,
**caractérisée en ce que**,
le soufflet (20) comporte au moins une ondulation, de préférence trois ondulations.

8. Vanne coulissante (1) pour fermer un conduit tubulaire, selon l'une des revendications 6 ou 7,
**caractérisée en ce que**,
le soufflet (20) comporte des ondulations orientées vers l'intérieur ou vers l'extérieur.

9. Vanne coulissante (1) pour fermer un conduit tubulaire, selon l'une des revendications précédentes,
**caractérisée en ce que**,
au moins un joint (7, 11) est ménagé entre la plaque latérale (10) et le dispositif récepteur du coin (5).

10. Vanne coulissante (1) pour fermer un conduit tubulaire, selon la revendication 9,
**caractérisée en ce que**,
la plaque latérale (10) ainsi que le dispositif récepteur du coin (5) comportent respectivement un joint périphérique (7, 11).

11. Vanne coulissante (1) pour fermer un conduit tubulaire, selon l'une des revendications précédentes,
**caractérisée en ce que**,
le coin coulissant (15) est connecté à un arbre d'entraînement (40).
